Europäisches Patentamt

European Patent Office

Office européen des brevets

(11) Publication number: 0 294 136
A2

# EUROPEAN PATENT APPLICATION

(21) Application number: 88304920.7

(22) Date of filing: 31.05.88

(51) Int. Cl.⁴: **H05B 3/26** , **H05B 3/74** , **C09K 9/00**

(30) Priority: 04.06.87 GB 8713103

(43) Date of publication of application:
07.12.88 Bulletin 88/49

(84) Designated Contracting States:
AT BE CH DE ES FR GB GR IT LI LU NL SE

(71) Applicant: THORN EMI plc
4 Tenterden Street
London W1A 2AY(GB)

(72) Inventor: Balderson, Simon Neville
64 Fleetham Gardens
Lower Earley Reading Berkshire(GB)

(74) Representative: Marsh, Robin Geoffrey et al
Thorn EMI Patents Limited The Quadrangle
Westmount Centre Uxbridge Road
Hayes Middlesex, UB4 0HB(GB)

(54) A heating unit comprising a thermochromic temperature indicator.

(57) A heating unit comprises a thermochromic temperature indicator and a heating element. The indicator comprises a thick film electrically resistive indicator track (2) having a defined pattern printed on a substrate (4) and a layer (6) of a thermochromic material applied to the substrate (4) so as to cover and surround the defined pattern. The heating unit further comprises means for responding to passage of current in the heating element by generating a current in the indicator track. Accordingly, when the heating element becomes hot, so does the indicator track, and a colour-change area showing the defined pattern becomes visible.

FIG. 2

EP 0 294 136 A2

## A HEATING UNIT COMPRISING A THERMOCHROMIC TEMPERATURE INDICATOR

The present invention relates to a heating unit comprising a thermochromic temperature indicator, and it relates especially, although not exclusively, to such an indicator as may be used to give a visual warning that a surface of the heating unit which is being, or has recently been, heated is too hot to touch.

There are many applications for such indicators, for example on the hobs of domestic cookers with glass ceramic cooktops, but although many potentially useful thermochromic materials are known, difficulties arise in providing the necessary visual indication with sufficient clarity and temperature stability for use in demanding environments.

Thermochromic materials suitable for applications as temperature indicators include organic materials with good temperature sensitivity but poor temperature stability and a range of less sensitive but more stable inorganic materials, including those described and claimed in our copending European Patent Application claiming priority from GB 8709051. Many of these materials are appropriate for applications to any of a number of heated devices, the material selected in each case being governed by the operating temperature of the device in question.

Thermochromic temperature indicators are often applied with temperature sensitive material defining a shape or word on a similarly coloured non-thermochromic background. When heated, the defined pattern (possibly 'hot' or 'on') stands out from the background as an indication of the elevated temperature. This configuration works very well for low temperature indications but its high temperature use is limited by the non-availability of temperature stable, colour-matched, non-thermochromic materials with sufficient colour strength.

In accordance with this invention, a temperature indicator displaying a defined pattern is prepared without the need for a non-thermochromic background by juxtaposing a thick film track and a thermochromic layer. Conveniently, the track is printed on a suitable substrate, e.g. a glass ceramic cooktop, so as to conform to the desired pattern and a suitable thermochromic material is applied to the substrate so as to cover the track pattern and also an area in excess of that occupied by the track pattern.

According to the present invention, there is provided a heating unit comprising a thermochromic temperature indicator on a substrate and a heating element; the indicator comprising a thick film electrically resistive indicator track having a defined pattern printed on the substrate, a layer of a thermochromic material applied to the substrate so as to cover and surround the defined pattern and means for responding to passage of current in said heating element by generating a current in said indicator track.

In such a heating unit, when the heating element is switched on, a current is passed which causes a corresponding current to be generated in the indicator track. Accordingly, as the heating element becomes hotter, so does the indicator track. This causes the thermochromic material covering and immediately above the indicator track to become hotter than, and hence be of a different colour from, the thermochromic material outside the area occupied by the indicator track. Thus, a colour-changed area of the desired shape (i.e. the pattern of the indicator track) becomes visible. When power is disconnected, the colour change is reversed at a rate determined by the materials and configuration chosen.

A specific embodiment of the invention will now be described, by way of example only, and with reference to the accompanying drawings in which:

Figure 1 shows, on an enlarged scale, a suitable defined pattern for an indicator track for a heating unit provided in accordance with the present invention;

Figure 2 shows the combination of a heating element and the indicator track of Figure 1;

and Figure 3 shows a suitable electrical connection between a heating element and an indicator track for a heating unit provided in accordance with the present invention.

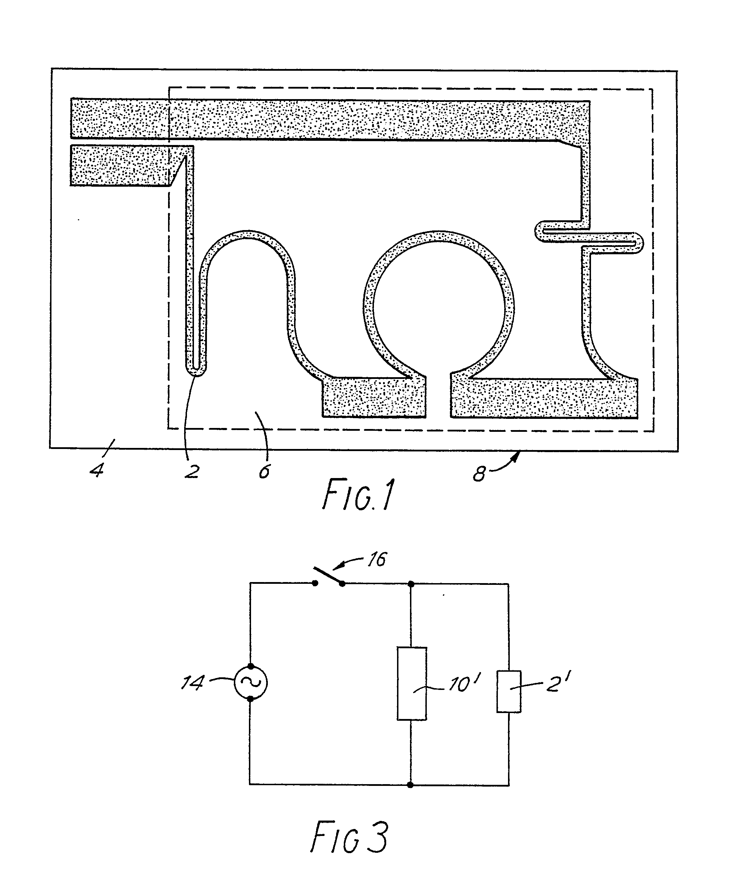

Referring to the drawings, Figure 1 shows a suitable indicator track design with the defined pattern showing the (English) word 'hot'. The indicator track is an electrically resistive thick film track 2 and is printed on a substrate 4. The substrate used preferably has very poor lateral thermal conductivity to prevent excessive spreading of the heat and corresponding blurring of the pattern. Glass or glass ceramic is suitable in this respect. A layer of a suitable thermochromic material (indicated by dotted lines and referenced by the number 6) is applied to the substrate 4 so as to cover and surround the indicator track 2. The whole forms an indicator unit 8.

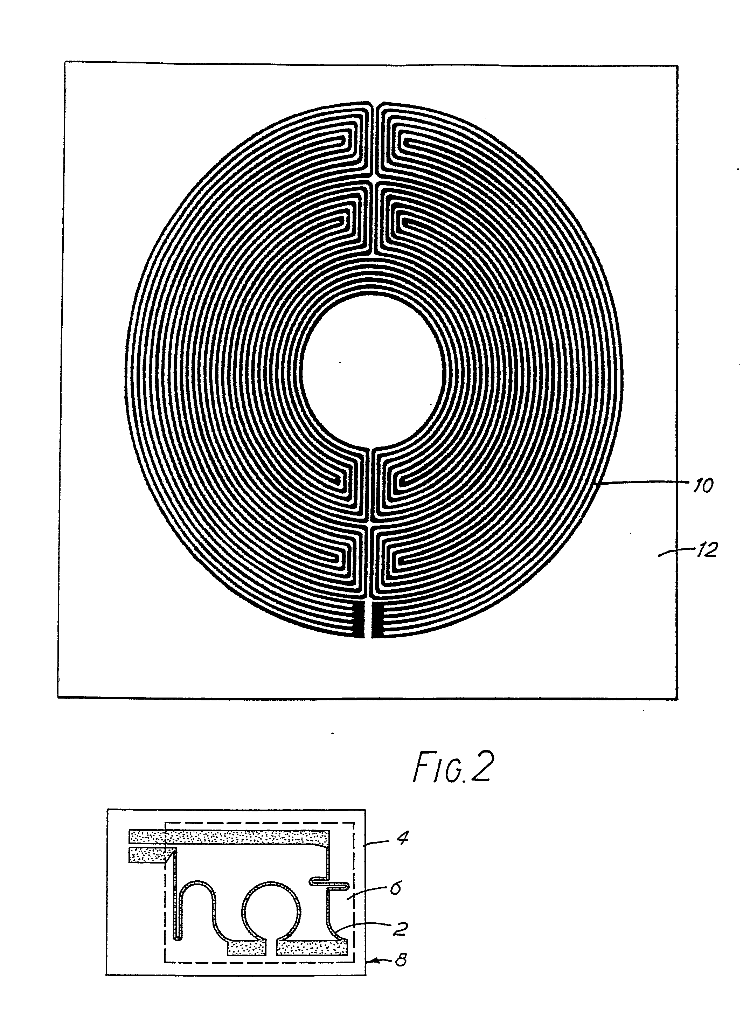

A heating element, shown in Figure 2, comprises an electrically resistive thick film track 10 on a substrate 12. The track is overglazed with a glass ceramic material to protect the track and to allow high temperature stable operation. The unit so produced can be mounted closely adjacent the underside of a glass ceramic cooktop to provide a heated area on the cooktop.

The indicator unit 8 associated with a heating element is provided in a position to be readily visible to a user of the heating element. Suitable positions include a position adjacent to the heated area (for example, on a ceramic cooker hob just outside the hotplate area) or a position completely detached from the heated area, possibly on a control panel.

A suitable but simple electrical circuit for connecting the indicator unit 8 and its associated heating element is shown in Figure 3. The resistance of the heating track is represented by the resistance $10'$ and that of the indicator track by the resistance $2'$. The two tracks 10, 2 are connected in parallel across a power supply 14. When the heating track 10 is switched on, at a switch 16, current flows both in the heating track 10 and in the indicator track 2.

Any electrical circuit can be used which includes the essential feature that passage of current in the heating track will cause a current to be generated in the indicator track. Thus, as outlined hereinbefore, when the heating track is switched on and heats up, current also passes through the indicator track so that the indicator track heats up. Accordingly, when the indicator track is hot, this indicates that the heating track is also hot.

As the indicator track heats up, the thermochromic material covering and immediately above it becomes hotter than the surrounding thermochromic material. This produces a colour contrast between the hotter thermochromic material immediately above the indicator track and the cooler thermochromic material surrounding the track and so a colour-changed area having the defined pattern of the indicator track becomes visible.

When power is disconnected, the heating track and indicator track cool down at a rate determined by the materials of which they and their respective substrates are made and on the respective configurations used. By tailoring the thermal mass of the substrate 4 on which the indicator track 2 is applied, it is possible to ensure that the coloured pattern remains visible for at least as long as the heated area in question is at a 'dangerous' temperature.

Several design configurations may be envisaged without departing from the scope of the invention. For example, the heater track could be part of a thick film or any other type of heating element or connected as a separate circuit not necessarily operating at mains voltage. As mentioned hereinbefore, the indicator could be adjacent to the heated area (for example, on a ceramic cooker hob just outside the hotplate area) or completely detached from the heated area, possibly on a control panel.

In addition to alleviating the need for a non thermochromic background colour, the invention offers several other benefits. As mentioned hereinbefore, by tailoring the thermal mass of the substrate it is possible to ensure that the coloured pattern remains visible for at least as long as the heated area in question is at a 'dangerous' temperature. Furthermore, the voltage applied to the thick film track can be selected so that the indicator operates at a different temperature to that of the heater device to which it is attached. This increases the choice of thermochromic materials which can be used for any given application, even allowing the use of sensitive low temperature materials with high temperature devices. Modifications to this embodiment within the scope of the invention will be apparent to those skilled in the art.

## Claims

1. A heating unit comprising a thermochromic temperature indicator on a substrate and a heating element; the indicator comprising a thick film electrically resistive indicator track having a defined pattern printed on the substrate, a layer of a thermochromic material applied to the substrate so as to cover and surround the defined pattern and means for responding to passage of current in said heating element by generating a current in said indicator track.

2. A heating unit according to Claim 1 wherein the substrate is formed of a material having a low lateral thermal conductivity.

3. A heating unit according to Claim 2 wherein the substrate is formed of a glass or glass ceramic material.

FIG.1

FIG 3

FIG.2